# EUROPEAN PATENT SPECIFICATION

(11) **EP 0 571 479 B1**
(45) Date of publication and mention of the grant of the patent: **15.11.1995**
(21) Application number: 92905050.8
(22) Date of filing: 12.02.1992
(51) Int. Cl.: F16B 13/04, F16B 13/12, E04B 1/48

(54) **ATTACHMENT PLUG**
BEFESTIGUNGSDÜBEL
CHEVILLE DE FIXATION

(30) Priority: 12.02.1991 SE 9100411
(43) Date of publication of application: 01.12.1993
(73) Proprietor: ENGFIX AB, S-262 53 Ängelholm (SE)
(72) Inventor: ENGSTRÖM, Boris, S-262 53 Ängelholm (SE)
(74) Representative: Ström, Tore
(86) International application number: SE9200083
(87) International publication number: WO9214065

(56) References cited:
- EP-A- 0 186 562
- DE-A- 3 329 201
- FR-A- 1 444 248
- FR-A- 2 619 170
- GB-A- 2 126 681
- SE-B- 451 615

## Description

The present invention relates to an attachment plug for attaching linings, screws, pins etc to a wall, said attachment plug comprising a substantially cylindrical sleeve formed by bending a metal sheet, said cylindrical sleeve comprising lugs punched in the metal sheet and bent outwardly, said lugs being spaced apart in the longitudinal direction of said sleeve.

The attachment plug of this kind is particularly well suited for use for mounting insulation on a house wall, but is also suited for use as nail plug, plug for hollow concrete stone, wall face plug and as conventional expansion plug.

Attachment plugs of the kind mentioned initially are previously known. Available on the market are thus attachment plugs of plastic material or metal which on the outside are provided with outwardly projecting lugs or tongues which yield when the plug is inserted into a bore hole, but blocks against removal of the plug by traction. Sleeve-like attachment elements made of thin steel sheet having lugs or tongues punched in the sleeve-like shell thereof and serving as blocking elements, are also previously known through DE-A-3 329 201, said attachment element comprising two series lugs or tongues bent outwardly. One series of tongues is bent in a direction outwardly from said sleeve and in a direction backwards in order to block against removal of the attachment element from the hole in which it is inserted, and the other series of tongues is bent in a direction inwardly towards the interior of the sleeve and having their free ends directed towards the inner end of the sleeve for engagement with a screw etc which is introduced into the sleeve.

Previously known attachment plugs of the kind mentioned above are available on the market in a great number of embodiments intended for different kinds of wall material and having each attachment plug within the different types of embodiments intended for a certain diameter of the screw, the pin etc which shall be attached to the wall by means of the attachment plug. The lugs or tongues projecting outwardly from the attachment plugs have a uniform length, which means that plugs intended for insertion in walls of a hard material are not suitable for insertion in walls of a soft material, e.g. light weight concrete, since when inserting the attachment plug into a soft material, the rigid lugs will tend to cut a groove into the wall material and thus providing very small blocking action against removal of the attachment plug from the wall. In those cases where the attachment plug includes inwardly directed projections, lugs or tongues, the attachment plug can be used only for wood screws having a diameter within a very narrow diameter range.

The present invention relates to an attachment plug of the kind mentioned initially, which is also suitable for fitting in different kinds of wall material, such as brick, concrete, light weight concrete, hollow concrete, stone etc, and which is particularly well suited for use for mounting insulation or other linings on walls, and which for one and the same hole dimension allows for the use of screws, bolts, pins etc of different diameters.

The objects mentioned above are obtained by a construction in accordance with the appended claims.

The invention will be described below in connection with an exemple of an embodiment with reference to the enclosed drawing, on which

fig 1 shows an enlarged side view of an attachement plug according to the invention, said plug being intended to be used for attaching e.g. an insulating layer on the inside of a wall.

Fig 2 is a section taken as shown by arrows A-A and C-C in fig 1.

Fig 3 is a section taken as shown by arrows B-B in fig 1.

Fig 4 is a section taken as shown by arrows D-D in fig 1.

Fig 5 is a section taken as shown by arrows E-E in fig 1.

Fig 6 is a section taken as shown by arrows F-F in fig 1.

Fig 7 is an end view of the attachment plug according to fig 1 as shown by arrows G-G.

Fig 8 is a development of the attachment plug formed from a thin rectangular spring steel and having tongues of lugs punched in the spring steel.

Fig 9 schematically illustrates the development of a variant of the attachment plug according to the invention to be used as a conventional plug.

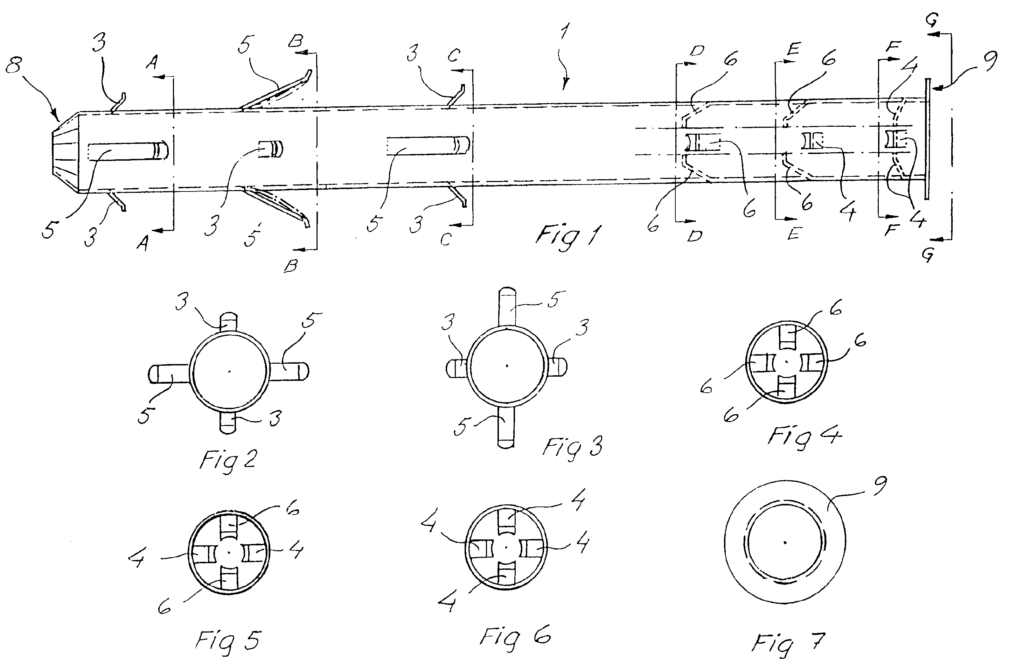

The attachment plug 1 illustrated in enlarged scale in figures 1-8 is particularly intended for use for attaching a lining, e.g. a layer of insulating material on a wall. The attachment plug thus includes an inner portion to be introduced into a bore hole in the wall with the dimensions of the bore hole adapted to the dimensions of the plug, and an outer portion which, after inserting the plug in said hole, protrudes from the wall a distance which substantially corresponds to the thickness of the lining, e.g. the insulating layer which shall be attached to the wall. The attachment plug 1 is made of a rectangular thin sheet 2 of spring steel, preferably stainless acid proof steel. In the front portion of the sheet 2 i.e. the portion which after bending the sheet 2 into sleeve form, constitutes the inner portion of the attachment plug for insertion into the wall, a number of lugs or tongues 3, 5 are punched, said lugs or tongues to be bent outwardly at an angle from the sheet which is bent into sleeve form. The free ends of said lugs are further bent outwardly. The punching has been made so that after bending outwardly the free ends of said lugs are directed away from the inner end of the attachment plug 1. The punched lugs comprise two series of lugs 3 and 5 having different lengths, all of them having a convexly curved terminal edge. As seen in fig 2 the lugs of the illustrated embodiment are punched one after the other to form rows. The uppermost row starts with a short lug 3, followed by a long lug 5 and then a short lug 3. The adjacent row starts with a long lug 5, followed by a short lug 3 and then a long lug 5. The pattern is repeated around the sleeve-formed inner portion of the attachment plug.

A number of lugs or tongues 4 and 6 are also punched in the rear portion of sheet 2 of spring steel, i.e. in the portion, which after bending of the sheet into sleeve form and inserting the attachment plug into a hole in the wall protrudes outside the wall, said lugs or tongues to be bent at an angle inwardly into the sheet bent into sleeve form. The punching of said lugs 4, 6 is such that the free ends of the inwardly bent lugs, which have a concave curved edge, are directed away from the outer end of the attachment plug, i.e. inwardly towards the inner end of the sleeve-formed attachment plug. The free ends of said lugs are further bent inwardly. The lugs punched in this portion of the attachment plug also include two series of lugs 4, 6 having different lengths, which, like the lugs in the outer portion of the attachment plug, are punched one after the other to form rows. The uppermost row thus comprises a short lug 4, followed by two long lugs 6, as seen from the outer end of the attachment. The adjacent row starts with a short lug 4, followed by another short lug 4 and then a long lug 6. This pattern is repeated in adjacent rows around the periphery of the attachment plug.

The number of rows having lugs 3, 5, bent outwardly in the inner end portion of the attachment plug 1 may be subject to variations, as well as the number of lugs in each row. The presence of at least two series of lugs having different lengths and alternating short lugs and long lugs, with result in that the attachment plug may be used in hard materials as well as in porous materials. In hard materials said short lugs provide a more firm grip due to the stiffness than the long lugs which are more resilient. In porous materials, e.g. light weight concrete, the short lugs tend to cut a groove for the following long lugs, which thus will obtain a greater deflection angle outwardly, resulting in an improved ability of supporting forces acting upon the attachment plug in a direction outwardly.

The number of rows of lugs which are bent inwardly as well as the number of lugs in each row may also be subject to variations. The fact that there are at least two series of lugs of different lengths which are bent inwardly is advantageous in that an attachment plug according to the invention of a certain dimension can be used for several different dimensions of screws or pins. The inwardly deflected lugs are also advantageous in that the screws do not need to be screwed into the attachment plug but may be introduced into the attachment plug by tapping or pushing action and then be tightened by means of a screw driver. The inwardly deflected lugs also allow for the use of screws or bolts having different types of threads, i.e. screws with conical threading as well as screws with cylindrical threading. The lugs 4 situated at the right end serve for centering and stabilizing a screw which is introduced into the sleeve. All lugs 4 and 6, having different lengths, are deflected inwardly such a distance that the free ends of said lugs terminate at the same distance from the centre axis of the attachment plug to form a centre opening having the same diameter. The deflecting angles of the lugs 4 and 6 respectively are thus different.

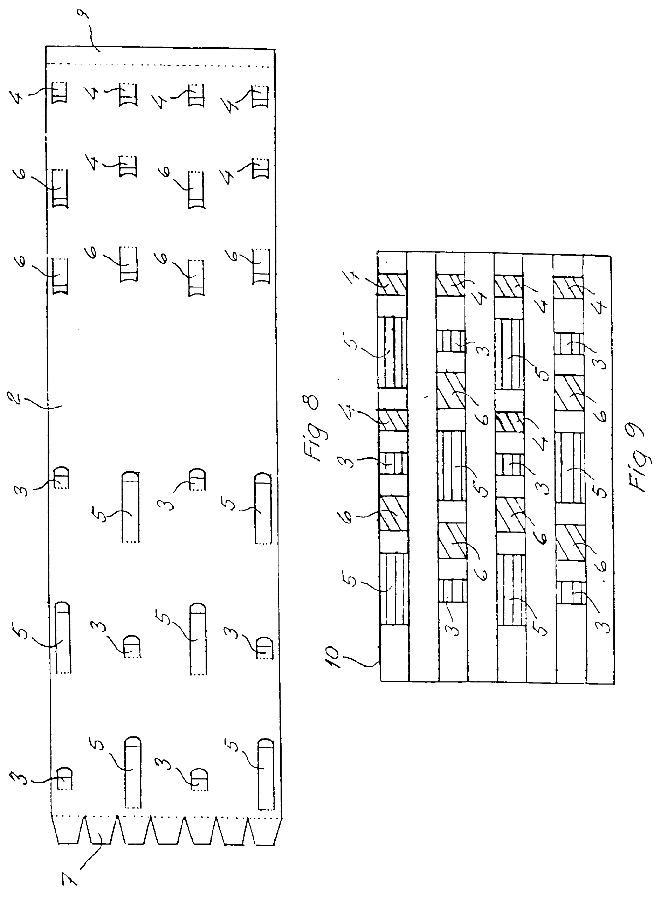

As appears from fig 8 a number of tapering lugs 7 are punched in the front short side of the rectangular sheet 2, said lugs to be bent at an angle inwardly to form a point or a rounded point 8 on the inner end of the attachment plug, e.g. as shown in fig 1, when the sheet 2 is bent to form a sleeve. As further appears from fig 8 the opposite short side of the rectangular plate 2 is provided with a collar 9 at the extreme end of the attachment plug, said collar being directed outwardly at right angle. When attaching a lining, e.g. an insulating layer on a wall, the insulating layer is passed over the attachment plugs protruding from the wall and is then secured in position by presssing insulation retaining means, e.g. a slotted bracket over said collar 9.

The attachment plug described with reference to figures 1-8 is, as mentioned, intended for use for attaching a lining on a wall and does thus protrude outside the wall and comprises lugs which are bent inwardly only in the outer portion of the attachment plug. However, the invention also comprises embodiments intended for use as a conventional plug which is completely introduced into the bore holes in the wall and which in addition to lugs which are bent outwardly also include lugs bent inwardly. A pattern for punching lugs which are bent outwardly as well as lugs which are bent inwardly in such an embodiment of the attachment plug according to the invention, is schematically illustrated in fig 9. In this figure the lugs extending outwardly have been indicated with a horizontal, parallel sectioning and the lugs extending inwardly have been indicated with a parallel sloping sectioning. As appears from fig 9 long lugs 5 directed outwardly and short lugs 3 directed outwardly are punched in the sheet 10 in an alternating sequence and in adjacent raws, and long lugs 6 directed inwardly and short lugs 4 directed inwardly in alternating sequence. This embodiment of the attachment plug may be provided with a point or a rounded point 8 and with a collar 9 in a corresponding way as described with reference to figures 1-8.

The transversal cross section of the lugs 3, 4, 5, 6 may have a plane, rectangular form. In that case the lugs will be relatively resilient, which may be preferred for attachment plugs intended for attachment in porous materials, e.g. light weight concrete. If a greater stiffness of the lugs is desired, said lugs may be punched during manufacture so that a transversally curved cross section having concave or convex curvature is obtained. Such an embodiment is preferred for attachment plugs intended for attachment in hard materials, e.g. brick, concrete etc.

Instead of extending substantially along a straight line in the direction sloping outwardly or inwardly respectively, the lugs 3-6 may be bent with a curvature outwardly or inwardly respectively as indicated by dash-and-dot lines at the lug 5 of fig 1.

The invention is not limited to the embodiments described above, but may be subject to variations within the scope of the appended claims.

## Claims

1. Attachment plug (1) for attaching linings, bolts, screws, pins etc on a wall, comprising a metal sheet (2) which is bent to form a substantially cylindrical sleeve provided with lugs (3, 4, 5, 6) spaced apart in the longitudinal direction of said sleeve, said lugs being punched in the metal sheet and bent outwardly in an angle with respect to the sleeve, **characterized** in that the metal sheet (2) consists of spring steel and in that said lugs punched in the sleeve comprise at least two different lengths of the lugs (3, 5 respectively 4, 6), the lugs being disposed in the longitudinal direction of the sleeve one after the other and comprising short lugs (3; 4) and long lugs (5; 6) in an alternating sequence.

2. Attachment plug as claimed in claim 1, **characterized** in that said sleeve comprises two sets of lugs (3; 5) which are bent in an outwardly direction from said sleeve and two sets of lugs (4; 6) which are bent in a direction inwardly towards the interior of said sleeve, said lugs (4, 6) which are bent inwardly having their ends directed towards the inner end of said sleeve and the lugs (3, 5) which are bent outwardly having their ends directed towards the outer end of the sleeve.

3. Attachment plug as claimed in claim 2, **characterized** in that each set of lugs comprises at least two different lengths of said lugs (3, 5 respectively 4, 6).

4. Attachment plug as claimed in claim 3, **characterized** in that said plug comprises an inner end portion to be inserted into a hole in a wall etc and an outer portion projecting outwardly a predetermined distance outside the wall, the inner end portion being formed with said lugs (3, 5) which are bent outwardly and the outer portion of said plug being formed only with lugs (4, 6) which are bent inwardly.

5. Attachment plug as claimed in any of claims 1-4, **characterized** in that said lugs (3, 5 respectively 4, 6) have a cross section form which is plane in the transverse direction.

6. Attachment plug as claimed in any of claims 1-4, **characterized** in that said lugs (3, 5 respectively 4, 6) have a cross section form having a concave or a convex curvature in the transverse direction.

7. Attachment plug as claimed in any of the preceeding claims, **characterized** in that the lugs (3, 5) pointing outwardly and the lugs (4, 6) pointing inwardly are bent with a curvature outwardly or inwardly respectively.

8. Attachment plug as claimed in any of claims 2-7, **characterized** in that the free ends of lugs (3, 5) bent outwardly are convexly rounded, and the free ends of lugs bent inwardly (4, 6) are concavely rounded.

9. Attachment plug as claimed in any of the preceeding claims, **characterized** in that the free ends of the lugs (3, 5, 4, 6) are bent at a certain angle.

10. Attachment plug as claimed in claim 9, **characterized** in that the free ends of lugs (3, 5) bent outwardly are bent in a certain angle outwardly, and the free ends of lugs (4, 6) bent inwardly are bent in a certain angle inwardly.

11. Attachment plug as claimed in any of claims 2-10, **characterized** in that the free ends of lugs (4, 6) bent inwardly terminate at the same distance from the centre axis of the attachment plug (1).

12. Attachment plug as claimed in any of the preceeding claims, **characterized** in that the inner end of the sleeve is formed with lugs (7) arranged peripherally adjacent each other, which are bent inwardly to form a rounded point (8) of the plug, the outer end of said sleeve being provided with an end flange (9) bent outwardly.

## Patentansprüche

1. Befestigungsdübel (1) zur Befestigung von Futtern, Bolzen, Schrauben, Nägeln und dergleichen an einer Wand, umfassend ein Metallblech (2), das zu einer im wesentlichen zylindrischen Hülse geformt ist, welche mit voneinander in Längsrichtung der Hülse beabstandeten Lappen (3, 4, 5, 6) ausgestattet ist, wobei die Lappen in das Metallblech gestanzt und unter einem Winkel bezüglich der Hülse nach außen gebogen sind,
**dadurch gekennzeichnet**,
daß das Metallblech (2) aus Federstahl besteht, und daß die in die Hülse gestanzten Lappen mindestens zwei unterschiedliche Längen der Lappen (3, 5 bzw. 4, 6) umfassen, wobei die Lappen in der Längsrichtung der Hülse einer nach dem anderen angeordnet sind und in abwechselnder Reihenfolge kurze Lappen (3; 4) und lange Lappen (5; 6) umfassen.

2. Befestigungsdübel nach Anspruch 1,
**dadurch gekennzeichnet**,
daß die Hülse zwei Sätze von Lappen (3; 5) aufweist, die in einer Richtung nach außen bezüglich der Hülse gebogen sind, und zwei Sätze von Lappen (4; 6) umfaßt, die in einer Richtung nach innen in Richtung auf das Innere der Hülse hin gebogen sind, wobei die Lappen (4, 6), die nach innen gebogen sind, mit ihren Enden zum inneren Ende der Hülse hin gerichtet sind, während die Lappen (3, 5), die nach außen gebogen sind, mit ihren Enden in Richtung auf das äußere Ende der Hülse hin gerichtet sind.

3. Befestigungsdübel nach Anspruch 2,
**dadurch gekennzeichnet**,
daß jeder Satz von Lappen mindestens zwei unterschiedliche Längen der Lappen (3, 5 bzw. 4, 6) umfaßt.

4. Befestigungsdübel nach Anspruch 3,
**dadurch gekennzeichnet**,
daß der Dübel einen inneren Endabschnitt aufweist, der in ein Loch in einer Wand oder dergleichen einzusetzen ist, und einen äußeren Abschnitt aufweist, der ein vorbestimmtes Stück von der Wand nach außen vorsteht, wobei der innere Endabschnitt mit den Lappen (3, 5) ausgestattet ist, die nach außen gebogen sind, während der äußere Abschnitt des Dübels nur mit Lappen (4, 6) ausgebildet ist, die nach innen gebogen sind.

5. Befestigungsdübel nach irgendeinem der Ansprüche 1 bis 4,
**dadurch gekennzeichnet**,
daß die Lappen (3, 5 bzw. 4, 6) eine Querschnittsform aufweisen, die in Querrichtung eben ist.

6. Befestigungsdübel nach irgendeinem der Ansprüche 1 bis 4,
**dadurch gekennzeichnet**,
daß die Lappen (3, 5 bzw. 5, 6) eine Querschnittsform besitzen, die in Querrichtung eine konkave oder eine konvexe Krümmung besitzt.

7. Befestigungsdübel nach einem der vorhergehenden Ansprüche,
**dadurch gekennzeichnet**,
daß die Lappen (3, 5), die nach außen weisen, und die nach innen weisenden Lappen (4, 6) mit einer nach außen weisenden bzw. einer nach innen weisenden Krümmung gebogen sind.

8. Befestigungsdübel nach einem der Ansprüche 2 bis 7,
**dadurch gekennzeichnet**,
daß die freien Enden der nach außen gebogenen Lappen (3, 5) konvex angerundet sind, und die freien Enden der nach innen gebogenen Lappen (4, 6) konkav abgerundet sind.

9. Befestigungsdübel nach einem der vorhergehenden Ansprüche,
**dadurch gekennzeichnet**,
daß die freien Enden der Lappen (3, 5, 4, 6) unter einem gewissen Winkel abgebogen sind.

10. Befestigungsdübel nach Anspruch 9,
**dadurch gekennzeichnet**,
daß die freien Enden der nach außen gebogenen Lappen (3, 5) unter einem gewissen Winkel nach außen gebogen sind, während die freien Enden der nach innen gebogenen Lappen (4, 6) unter einem gewissen Winkel nach innen gebogen sind.

11. Befestigungsdübel nach einem der Ansprüche 2 bis 10,
**dadurch gekennzeichnet**,
daß die freien Enden der nach innen gebogenen Lappen (4, 6) in der gleichen Entfernung von der Mittelachse des Befestigungsdübels (1) enden.

12. Befestigungsdübel nach einem der vorhergehenden Ansprüche,
**dadurch gekennzeichnet**,
daß das innere Ende der Hülse mit Lappen (7) ausgestattet ist, die einander in Umfangsrichtung benachbart angeordnet und nach innen gebogen sind, um einen abgerundeten Punkt des Dübels zu bilden, wobei das äußere Ende der Hülse mit einem nach außen gebogenen Endflansch (9) ausgestattet ist.

## Revendications

1. Cheville de fixation (1), pour fixer des revêtements, des boulons, des vis, des broches etc. à une paroi, comprenant une tôle (2) incurvée pour former un manchon sensiblement cylindrique pourvu d'oreilles (3, 4, 5, 6) espacées dans la direction longitudinale dudit manchon, lesdites oreilles étant embouties dans la tôle et incurvées vers l'extérieur pour former un angle par rapport au manchon, caractérisée en ce que la tôle (2) consiste en de l'acier élastique et en ce que lesdites oreilles embouties dans le manchon présentent au moins deux longueurs d'oreilles (3, 5 ou 4, 6) les oreilles étant disposées dans la direction longitudinale du manchon, les unes après les autres et comprenant de courtes oreilles (3; 4) et de longues oreilles (5; 6) suivant une séquence alternée.

2. Cheville de fixation selon la revendication 1, caractérisée en ce que ledit manchon comprend deux jeux d'oreilles (3; 5) incurvées dans une direction orientée vers l'extérieur dudit manchon et deux jeux d'oreilles (4; 6) incurvées dans une direction orientée vers l'intérieur dudit manchon, lesdites oreilles (4, 6) incurvées vers l'intérieur présentant leurs extrémités orientées vers l'extrémité intérieure dudit manchon et les oreilles (3, 5) incurvées vers l'extérieur ayant leurs extrémités orientées vers l'extrémité extérieure du manchon.

3. Cheville de fixation selon la revendication 2, caractérisée en ce que chaque jeux d'oreilles comprend au moins deux longueurs différentes d'oreilles (3, 5 ou 4, 6).

4. Cheville de fixation selon la revendication 3, caractérisée en ce que ladite cheville comprend une partie d'extrémité intérieure à insérer dans un trou ménagé dans une paroi, etc., et une partie extérieure, faisant saillie vers l'extérieur sur une distance prédéterminée à l'extérieur de la paroi, la partie d'extrémité intérieure étant pourvue desdites oreilles (3, 5) qui sont incurvées vers l'extérieur et la partie extérieure de ladite cheville étant pourvue seulement d'oreilles (4, 6) incurvées vers l'intérieur.

5. Cheville de fixation selon l'une quelconque des revendications 1 à 4, caractérisée en ce que lesdites oreilles (3, 5 ou 4, 6) ont une forme de section transversale qui est plane dans la direction transversale.

6. Cheville de fixation selon l'une quelconque des revendications 1 à 4, caractérisée en ce que lesdites oreilles (3, 5 ou 4, 6) ont une forme de section transversale présentant une incurvation concave ou convexe dans la direction transversale.

7. Cheville de fixation selon l'une quelconque des revendications précédentes, caractérisée en ce que les oreilles (3, 5) orientées vers l'extérieur et les oreilles (4, 6) orientées vers l'intérieur sont incurvées avec une incurvation orientée respectivement vers l'extérieur ou l'intérieur.

8. Cheville de fixation selon l'une quelconque des revendications 2 à 7, caractérisée en ce que les extrémités libres des oreilles (3, 5) incurvées vers l'extérieur sont arrondies de manière convexe et les extrémités libres des oreilles (4, 6) incurvées vers l'intérieur sont arrondies de manière concave.

9. Cheville de fixation selon l'une quelconque des revendications précédentes, caractérisée en ce que les extrémités libres des oreilles (3, 4, 5, 6) sont recourbées en formant un certain angle.

10. Cheville de fixation selon la revendication 9, caractérisée en ce que les extrémités libres des oreilles (3, 5) incurvées vers l'extérieur sont recourbées en formant un certain angle vers l'extérieur et les extrémités libres des oreilles (4, 6) incurvées vers l'intérieur sont recourbées en formant un certain angle vers l'intérieur.

11. Cheville de fixation selon l'une quelconque des revendications 2 à 10, caractérisée en ce que les extrémités libres des oreilles (4, 6) incurvées vers l'extérieur se terminent à la même distance de l'axe central de la cheville de fixation 1.

12. Cheville de fixation selon l'une quelconque des revendications précédentes, caractérisée en ce que l'extrémité intérieure du manchon est pourvue d'oreilles (7), disposée périphériquement adjacentes les unes aux autres, qui sont incurvées vers l'intérieur pour former une pointe arrondie (8) de la cheville, l'extrémité extérieure dudit manchon étant pourvue d'une bride d'extrémité (9) recourbée vers l'extérieur.
